Europäisches Patentamt

European Patent Office

Office européen des brevets

(11) Publication number: **0 258 027 B1**

## EUROPEAN PATENT SPECIFICATION

(45) Date of publication of patent specification: **19.08.92**

(51) Int. Cl.⁵: **C01B 33/02**

(21) Application number: **87307464.5**

(22) Date of filing: **24.08.87**

(54) Preparation of polysilicon by silane pyrolysis.

(30) Priority: **25.08.86 US 899906**
**16.01.87 US 4116**

(43) Date of publication of application:
**02.03.88 Bulletin 88/09**

(45) Publication of the grant of the patent:
**19.08.92 Bulletin 92/34**

(84) Designated Contracting States:
**AT BE CH DE FR GB IT LI LU NL SE**

(56) References cited:
**US-A- 4 292 344**

**EIGHTEENTH IEEE PHOTOVOLTAIC SPECIAL-ISTS CONFERENCE, 1984, pages 553-557, IEEE; G. HSU et al.: "Fluidized bed silicon deposition"**

**CHEMICAL ABSTRACTS, vol. 98, no. 4, 24th January 1983, page 155, abstract no. 19429s, Columbus, Ohio, US; N.K. ROHATGI et al.: "Silane pyrolysis in a fluidized-bed reactor", & PROC. - ELECTROCHEM. SOC. 1982, 82-8(MATER. NEW PROCESS. TECHNOL. PHOTOVOLTAICS), 477-87**

(73) Proprietor: **ETHYL CORPORATION**
**Ethyl Tower 451 Florida Boulevard**
**Baton Rouge Louisiana 70801(US)**

(72) Inventor: **Gautreaux, Marcelian Francis**
**1662 Pollard Parkway**
**Baton Rouge Louisiana 70808(US)**
Inventor: **Allen, Robert Hall**
**5841 Tarrytown Avenue**
**Baton Rouge Louisiana 70808(US)**

(74) Representative: **Collier, Jeremy Austin Grey et al**
**J.A.Kemp & Co., 14 South Square, Gray's Inn London WC1R 5LX(GB)**

Rank Xerox (UK) Business Services

EP 0 258 027 B1

JOURNAL OF THE ELECTROCHEMICAL SOCI-
ETY.: SOLID-STATE SCIENCE AND TECHNOL-
OGY, vol. 131, no. 3, March 1984, pages
660-663, Princeton, New Jersey, US; G. HSU
et al.: "Fines in fluidized bed silane
pyrolysis"

N.T.I.S. TECHNICAL NOTES, no. 2, part H,
February 1986, Springfield, Virginia, US; G.
HSU et al.: "Fluidized-bed particles scavenge
silicon fines"

CHEMICAL ENGINEERING SCIENCE, vol. 41,
no. 4, 1986, pages 633-641, Pergamon Press
Ltd, GB; S. LAI et al.: "Chemical vapor depo-
sition and homogeneous nucleation in
fluidized bed reactors: silicon from silane"

## Description

This invention pertains to, but is not restricted to, silicon deposition by silane pyrolysis in a fluidized bed reactor. More particularly, it pertains to a method for preparing high purity silicon. In an important aspect, this invention provides means for reducing the amount of silicon dust on the surface of larger silicon particles.

It is known in the art that the fluidized bed reactor offers many advantages for chemical vapor depositions. For example, the fluidized bed provides improved energy utilization and material economy; see Wakefield, U.S. 4,154,870. As pointed out in that reference, continuity of operation, the large surface area of the fluidized particles and the high exposure of solid surfaces to the gas stream all provide economy of operation.

McHale, U. S. 4,292,344, pertains to production of polycrystalline silicon by decomposition of silane, or a halosilane, in a fluidized bed. It teaches that process conditions are preferably maintained so that decomposition of the silicon compound occurs in a heterogeneous manner; i.e. so that silicon is deposited on the surface of particles in the bed. The reference points out, however, that in conventional reactors, homogeneous decomposition of silane also takes place, resulting in the formation of fine silicon powder or dust. This material is a light, fluffy powder and is usually undesirable since it is difficult to handle.

Eversteijn, Philips Res. Repts. 26, 134-144, (1971) comprises a study of gas phase, i.e., homogeneous, decomposition of silane in a horizontal epitaxial reactor. It was found that gas phase decomposition is a serious factor that must be taken into account. In order to avoid gas phase decomposition, the maximum silane concentration in the hydrogen admitted to the reactor was 0.12-0.14 volume percent, depending on the gas temperature. When this critical silane concentration was exceeded, gas phase decomposition occurred giving rise to silicon fines which deposited on the substrate.

The Eversteijn article is referenced in Hsu et al, J. Electrochem Soc.: Solid State Science and Technology, Vol. 131, No. 3, pp. 660-663, (March, 1984). As stated there, the success of the Siemen's process led to its universal adoption for producing semiconductor grade silicon, and the de-emphasis of fluidized bed process development. In 1975, the potential market for semiconductor grade silicon for photovoltaic use made fluidized bed (FB) production of polysilicon more attractive. Fluidized bed operation has the capabilities of high-throughput, continuous operation and low energy cost. Because silane has a low decomposition temperature, and can be completely converted in a non-reversible reaction, it is attractive for use in FB operation. Additional advantages are the non-corrosive atmosphere, and ease of recycling by-product hydrogen. In conventional chemical vapor decomposition devices, there is a limit of silane concentration in hydrogen beyond which unwanted fines are homogeneously nucleated. Thus, in addition to the desired decomposition, silicon dust or fines appear in the gas phase. These particles vary in size from submicron to 10 $\mu$m and present mechanical problems in the operation of the reactor. They are also difficult to transport. Dust and fines are considered losses in the process. Hence, conventional reactors are operated with low silane concentrations to prevent excess fines formation. In a fluidized bed reactor, less fines are generated because (i) there is less free space available for homogeneous nucleation and (ii) the silicon particles scavenge the fines and incorporate them into the deposition growth. Consequently, the net amount of fines is less than for chemical vapor deposition apparatus, and a fluidized bed reactor can be operated at much higher silane concentrations with greater throughput. Variables which effect the amount of fines elutriated were studied. Conclusions reached were as follows:

Elutriated fines increase with increased silane concentration, increased temperature, increased gas bubble size, and increased gas velocity. The authors selected 600-800 °C. and a gas velocity of $U/U_{MF} = 3-8$ as good operating parameters.

Another article, Hsu et al, Eighteenth IEEE Photovoltaic Specialists Conference (1984) pp. 553-557, discusses additional studies on fines formation. It states that silane pyrolysis in a fluidized bed reactor can be described by a six-path process: heterogeneous deposition, homogeneous decomposition, coalescence, coagulation, scavenging, and heterogeneous growth on fines. The article indicates that fines formation can be reduced by providing at a suitable bed location, a secondary source of silane for cementation.

The cited art clearly shows that production of silicon via decomposition of silane is complicated, and that provision of improved processes is not straight forward. Nonetheless, because of continuing advances in the electronics industry and the development of new products in that field, improvements in existing technology are needed to provide high purity silicon at reduced cost.

This invention provides a process which causes silicon dust on the surface of larger silicon particles to adhere to, and become an integral part of the larger particles. By this process, the amount of dust that is readily removable from product silicon particles is reduced, and consequently a more acceptable product is formed. Furthermore, with the method of this invention, it is economically feasible to operate a fluidized bed reactor for at least much of the time under conditions which allow high production rates. Since high overall productivity can be achieved, initial reactor investment can be reduced, primarily because the reactor can he smaller than what would otherwise be required.

It has been found that the silicon products of this invention, which comprise dust and larger particles bonded together, are suitable for the production of silicon for semiconductor devices. Thus they comprise a useful article of commerce.

In the process of this invention the product is upgraded, not by removal of unwanted material from product surfaces, but by making this unwanted material an integral part of the product. Thus dust or fines are not wasted. Moreover, with this invention it is not necessary to resort to expensive techniques such as polishing or washing, to remove the dust or fines.

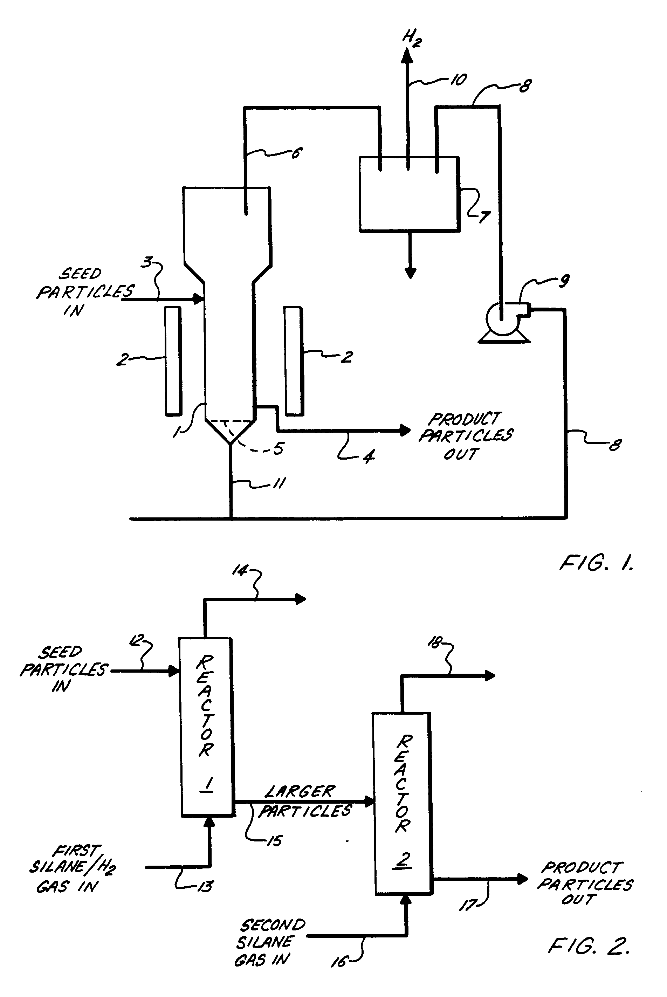

Figure 1, is a schematic representation, partly in cross section and not to scale, of a fluid bed reactor and attendant equipment in accordance with certain embodiments of this invention. This figure pertains to a semicontinuous process or method of this invention.

Figure 2 is a schematic flow diagram, not to scale, depicting a more continuous operation of this invention. In contrast to the method and apparatus of Figure 1, which comprise usage of one fluidized bed reactor, the embodiments depicted by Figure 2 employ two such reactors; the product of the first reactor being fed to the other reactor so that the first reactor can be operated in a continuous or nearly continuous manner.

In the process of this invention the amount of silicon dust or fines on the surface of larger silicon particles is reduced by contacting silicon that has surface silicon dust thereon with a mixture of hydrogen and silane, while decomposing the silane under conditions that favor forming a thin layer of silicon deposit that "glues" or binds the dust to the surface of the treated silicon. This gluing process is well suited to treatment of silicon particles made by a fluidized bed operation in which a mixture of hydrogen and silane is decomposed. The step of "gluing on", i.e. binding the dust or fines with the thin layer of silicon, can be conducted with a silane which is the same or different from the silane used in the particle growth phase or mode. The process is conducted using two modes: the first being a high productivity growth phase; and the second being the gluing on step in which dust that was formed and deposited on the particles in the first phase is made to adhere to the larger particles that were produced in the first phase.

The invention is particularly directed towards a process for preparing polysilicon comprising:

[I] contacting silicon particles in a fluidized bed with a mixture of hydrogen and silane containing 10 to 100 preferably 10 to 20 mole percent of silane at a temperature of 590° to 750°C so that both heterogeneous deposition and homogeneous decomposition take place resulting in (a) chemical vapor deposition of silicon on said particles and also (b) the formation of silicon dust; and

[II] subsequently contacting silicon particles resulting from step [I] in a fluidized bed with a mixture of hydrogen and silane containing 1 to 5 mole percent of silane at a temperature of 620° to 650°C to deposit by heterogeneous deposition a layer of silicon 0.1 to 5 $\mu$m thick on the surfaces of said particles and cement silicon dust on said surfaces to said particles.

The process of the invention may be conducted with steps [I] and [II] sequentially in the same fluid bed reactor or alternatively with step [I] in one reactor and step [II] in a second reactor. In a preferred embodiment of the process of the invention the duration of step [I] is 2 to 5 times that of step [II].

Furthermore, this invention also provides improved polysilicon products suitable, for example, to prepare silicon for semiconductor devices.

Included in the invention is the use of the polysilicon product of the invention to prepare a semiconductor device and the preparation of a semiconductor device using the process of the invention.

In important aspects, this invention comprises operation of a fluidized bed reactor. Reference to Figure 1 will illustrate such an embodiment of this invention.

In that figure, a fluidized bed reactor is illustrated by reactor 1 having a reaction zone containing particles of high purity silicon. The reactor is fitted with external heating means 2 surrounding the reactor zone, and sufficient to heat the bed of particles to an operation temperature above the decomposition temperature of silane. The reactor is fitted with feedline 3 for introduction of seed silicon particles, and line 4 for removal of larger-sized silicon particles formed by the process of the invention. The reactor has a gas distributor 5 which is a multiple pore device through which silane and hydrogen, or other carrier gas, is introduced into the bed of particles in the reactor. The pores of the distributor device are numerous, to facilitate intimate contact of the deposition gases with the particles in the reaction zone. Line 6 provides for exit of gases, (such as carrier gas, unreacted silane, and by-product hydrogen) admixed with silicon fines or dust particles formed during the process. The fines are removed by collection device 7. Hydrogen from the collection device can be recycled through line 8, pump 9 and a heat exchanger, not shown, back into the reactor as carrier gas. The process is a net producer of hydrogen and therefore a portion of hydrogen from

4

device 7 can be sent via line 10 to other uses.

The hydrogen and silane are admixed and adjusted to desired concentrations by passage through metering and monitoring devices (not shown). After admixture, the resultant gas mixture enters the reactor device below distributor 5 via line 11. The incoming gas may be preheated if desired. To prevent fouling and plugging, distributor 5 may be fitted with cooling means, (not shown).

Preferably, the reactor is first operated under high productivity conditions, for example by using a deposition gas more concentrated in silane than the decomposition gas employed in the gluing on operation. The concentration of the silane gas employed under the high productivity conditions can be as high as 100 mole percent for example, but normally one will operate at a silane concentration of 10 to 20 mole percent and a process temperature of preferably 620°C - 750°C. When operated in this manner a significant amount of silicon metal dust or fines is formed as a co-product. Some of this is removed by line 6 and collected in collection device 7; as described above. Other dust particles are deposited on the surface of the larger silicon particles in the fluidized bed, and can cause problems on handling after the larger particles are removed from the device.

The operation of the process of the invention will now be described in detail by way of example only. The operator charges the reactor with the desired amount of silicon bed particles. The reactor volume filled with particles is measured. After using a first deposition gas, the mass of silicon that has been deposited within the particle bed is determined. For example, the operator may charge the reactor with 300 kg of bed particles having an average particle size or surface mean diameter ($d_{ps}$) of 625 microns. After bringing the bed to an operating temperature of say 640°C, a first deposition gas; for example comprising 65 standard cubic feet ($1.84 \ m^3$) per minute of hydrogen and 50 pounds (22.7 kg) per hour of silane, is introduced into the reactor and this gas mixture is continuously fed for three hours. From reactor effluent gas analysis for unreacted silane, and from the amount of dust collected in the effluent gas during the feeding period, the operator can determine what percentage of silane fed has deposited silicon on the bed particles. For example, assume the operation results in 90% of the silicon that was fed as silane being deposited on the bed particles. Then:

$$\text{Si deposited} = 50 \ \text{lbs/hr.} \times \frac{28 \ (\text{at. wt. of Si})}{32 \ (\text{mol. wt. of } SiH_4} \times 90\% = 39.4 \ \text{lbs/hr.}$$

This is equal to 17.9 kg/hr. of silicon deposited. Therefore, the increase of bed weight over 3 hours is (17.9 × 3) or 53.7 kg. The increase in bed weight can be expressed as (54.7/300) or 18%.

From a sample of the bed particles, the operator determines the particle size distribution using a screen analysis. From this determination the operator calculates surface area per gram or surface mean diameter, $d_{ps}$. For example, assume screen analysis shows that the $d_{ps}$ after the three hour deposition has increased from 625 to 650 microns. Then, the total bed particle surface area is given by the expression:

$$Ap = \frac{6W_p}{d_{ps} \cdot \rho}$$

where $\rho$ is the density of silicon, i.e. 2.32 $gm/cm^3$. Hence, Ap in this instance will be:

$$\frac{6 \times 354 \text{ kg} \times 1000 \text{ g/kg}}{650 \times 10^{-4}\text{cm} \times 2.32 \text{ g/cm}^3}$$

$$\frac{2.124 \times 10^6}{1508 \times 10^{-4} \text{ cm}^{-2}}$$

$$\frac{2.124 \times 10^6}{0.1508 \text{ Cm}^2} = \underline{\underline{14.08 \times 10^6 \text{cm}^2}}$$

Assume further that the operator wishes to deposit a layer of silicon of average thickness of 1.5 micron to make the dust on the surface of the particles adhere to and become a part of the particles. Then, the amount of silicon to be deposited is given by the relationship:

$$\text{Si required} = \Delta \times Ap \times \rho$$

$$= 1.5 \times 10^{-4}\text{cm} \times 14.085 \times 10^6 \text{cm}^2$$

$$\times \frac{2.32 \text{ kg.}}{1000\text{cm}^3}$$

$$= \frac{49.0 \times 10^2 \text{kgCm}^3}{1000 \text{ Cm}^3}$$

$$= \underline{\underline{4.9\text{Kg of silicon}}}$$

If the operator assumes a 95% deposition efficiency for the silicon fed as silane, then the total amount of silane to be fed in the second deposition gas will be

$$\text{Silane required} \quad \frac{4.9}{0.95} \times \frac{32}{28} = \underline{\underline{5.9 \text{ Kg. Silane}}}$$

If the silane is to be provided in a concentration of 4 mole percent with hydrogen introduced at 65 SCFM $(1.84 \text{ m}^3/\text{min}$, then the following calculations show the rate of introduction of silane.

$\text{wtH}_2/\text{hr.} = 65\text{ft}^3/\text{min} \times 0.028\text{m}^3/\text{ft}^3 \times 1000 /\text{m}^3 \times 0.09\text{g/l} \times 60\text{min.}$
$= 9828\text{g}$ or 9.8kg of $H_2$ per hour

This amount of hydrogen is equal to 9828/2 or 4914 moles of hydrogen per hour. At a desired concentration of 4 mole percent in the second deposition gas, $(0.04 \times 4914) \div 0.96$ or 204 moles of silane must be fed per hour, i.e. or 6.55 kg of silane. Since only 5.9 kg of silane is required for depositing the 1.5 $\mu$m layer, the operator will feed the silane at the calculated rate for 0.9 hours, i.e. 54 minutes.

The total depositions are 53.7 + 4.9 or 58.6 kg of silicon. Hence the operator can withdraw 58.6 kg of product from the reactor, calculate the number of product particles and replenish the reactor with the same number of seed particles and repeat the cycle.

The amount of silane introduced into the reactor as a second deposition gas generally consists essentially of 1-5 mole percent silane in an inert carrier gas. Such a silane concentration favors chemical vapor deposition substantially free of homogeneous decomposition at the preferred process temperature, 620-650°C.

6

If product particles are removed from the reactor after the second deposition, the amount of readily removable surface dust will have been reduced by a considerable extent. Stated another way, a significant amount of the surface dust deposited on the particle surfaces during the high productivity operation will have become glued on, bonded or united, i.e. made to adhere to the larger particles by the thin layer deposited from the second deposition gas. The dust or fines are typically composed of particles about 0.2-0.5 $\mu$m in size; the particles on which the silicon deposition take place preferably have a surface mean diameter of 400-1000 $\mu$m, more preferably 400 to 700 $\mu$m. Generally, during the second deposition homogeneous decomposition of silane cannot be entirely avoided and consequently some additional dust is deposited upon silicon particles in the bed. However, since the second deposition is conducted under conditions which heavily favor heterogeneous deposition, the amount of additional dust deposited is relatively small. However, some dust may remain on the particles after the cementing operation and may be produced by that operation.

The use of two deposition gases in the invention as discussed above reflects two important aspects of this invention. First, it is desirable, from the standpoint of productivity, to operate a fluidized bed reactor for production of silicon from silane under conditions by which silicon is deposited rapidly, but which (unfortunately) also cause homogeneous decomposition of silane to occur to a significant extent, thereby resulting in formation of a significant amount of silicon fines or dust co-product. Although the fines or dust elutriated from the reactor are not nearly as valuable as the larger silicon particles produced, and in fact can amount to waste, operation in such a regime is attractive because growth of the silicon particles occurs at a rate faster than achievable under conditions where only chemical vapor deposition takes place. To upgrade the product particles, it is desirable to lower the amount of dust that is loosely deposited on the surface. Of course, the dust can be removed by polishing or by immersing the dusty particles in a liquid and agitating the resultant mass, say with ultrasonic vibration to assist removal of the dust. But an alternative method is needed since such treatments are costly, wasteful and can introduce a source of particle contamination.

The second important aspect of this invention comprises the discovery that the use of the second deposition gas as taught herein comprises a treatment that cements surface dust, resulting in a product that not only has the required purity, but which can be more readily handled. It was also unexpectedly discovered that this bonding or uniting of the surface particles requires less than one micron, for example 0.1-1.0 $\mu$m. Hence, for this invention 0.1 to 5 $\mu$m of additional silicon are generally deposited on the particle surface.

It is to be understood that the process of this invention is not critically dependent on the size or configuration of the fluidized bed reactor. For example, in contrast to the device shown in figure 1, the feed silicon seed particles can be added near the bottom of the reactor and product taken off near the top. Moreover, the reactor can be short or tall and the process conditions adjusted in order to make satisfactory product by operation thereby. In this regard it is preferred to operate in accordance with good fluid bed reactor processing as appreciated in the art; but it is not critically necessary to do so.

To achieve better results the gases and silicon particles in the bed are intimately contacted. Means for achieving this will be apparent to a skilled practitioner from the discussion below.

To promote contact between the deposition gases and high purity silicon seed particles, and also to reduce to a low level the amount of silicon fines production via homogeneous or gas phase silane decomposition, gas bubble size is kept small. Bubble size control is assisted by good gas distribution through the distributor, even flow with avoidance of slugging, and lower gas velocity. In many instances gas velocity is above that required to keep fines production to a minimum; since such greater velocities can contribute to increased productivity of desired product, i.e. weight of silicon deposited per unit time.

Generally, there is a threshold or minimum gas velocity required to keep the particle bed in a fluidized state. Operational velocities for input of deposition gas into the bed are generally somewhat above this minimum, $U_{min}$. In many instances the operation velocity U, is 1 to 10 times $U_{min}$; preferred velocities are $1.2 \leq U/U_{min} \leq 8$; more preferably, $1.5 \leq U/U_{min} \leq 3.5$.

The first and second deposition gas may be introduced at the same or different rates, as desired. Generally, good results are obtained if the hydrogen or other inert gas is introduced at about the same rate, and differing rates are used for silane in order to adjust the concentration of silane. As indicated above, the first deposition gas is preferably used so that silane is introduced at a rate which together with the other variables favors high productivity, while the second deposition gas is introduced with silane under conditions which heavily favor chemical vapor deposition and reduce the amount of homogeneous decomposition. The flow of hydrogen in each gas can be the same. In many instances the slower introduction of silane in the second step or mode results in a higher percentage of the silicon introduced (as silane) being deposited.

Although from a theoretical point of view it might be better to operate such that all silane contacted with the bed of silicon particles decomposes to form silicon while being contacted with the bed, this is generally not the preferred case in actual practice. It has been found advantageous to operate the first step, i.e. the high productivity mode under conditions wherein 10-25% of the silane does not react and exits the reactor. Operation in a regime that comprises this feature enhances productivity: growth or deposition rates are higher at higher conversions; however dust production is high when conversions are high. For the second mode dust formation is much reduced.

Intimate contacting of the gaseous reactant and deposition surface may be facilitated by introducing gas into the bed through a distributor having a plurality of openings in its surface adjacent to the bed of particles. Preferably the openings are substantially uniform, relatively small, and substantially evenly spaced across the surface that is adjacent to the bed surface.

For this invention, the introduction of gases into the fluidized bed is generally conducted by introducing the gases at a slightly positive pressure to facilitate fluid flow. The pressure of the gas introduced at or near the interface of the distributor and the bed is generally 1 to 3 atmospheres, more preferably from 1.01 to 2 atmospheres (1 at ≈ 0.98 bar).

It is readily apparent to a skilled practitioner that the size of the particles, bed height, bubble size, gas velocity and pressure, size and configuration of the reaction zone, are important variables but not a part of the essence of the invention disclosed herein. Selection of a matrix of operating conditions by a skilled practitioner and within the guidelines discussed herein, will achieve good results.

As immediately recognizable by a skilled practitioner, it is necessary that the process be conducted above the decomposition temperature of silane; i.e. above 500°C. Thus, suitable means must be provided so that the deposition gas being contacted with the silicon particles is above the temperature at which silane thermal decomposition begins to take place. The process temperature is further selected so that the relative rates of (a) deposition of silicon on the particle surfaces compared to the (b) rate of fines formation via homogeneous gas phase decomposition is within acceptable limits. While the temperature can be any temperature between the thermal decomposition temperature of silane and the melting point of silicon, it is preferred that the process temperature be within the range of from 590°C. to 650°C.; more preferably from 620°C. to 650°C. The preferred temperatures given above are selected for use with silane and by such considerations as the level of impurities picked up from feed lines in the reactor employed, and the degree of homogeneous decomposition. Utilizing a different system or a different degree of homogeneous decomposition, the process can be operated very well with different preferred temperatures. Usually the temperature for the first and second mode are about the same since it is inconvenient to change the temperature because of the high heat capacity of the apparatus, especially when it is comparatively large in size.

Table I gives surface dust measurements of typical fluid bed operation at conditions favoring high productivity. The data were obtained from three different size reactors with ID's (internal diameters) as shown in Figure 1. Particle size, silane concentrations, and bed temperature were varied as indicated in the table. These data show a direct relationship between the reactor productivity and the amount of dust adhering to the particle surface. To produce polysilicon with an acceptable surface dust level (e.g., 0.1 wt. %) with a reactor operated using typical prior art fluid bed operating procedures, reactor productivity would be limited to 10-20 lb/hr ft$^2$ (49-98 kg/hr m$^2$).

However, because of obvious economic considerations, it is desirable to operate at higher productivities and, much higher productivities are usable. Examples of higher productivities are given in the table.

As indicated above, the process of this invention comprises operating in two modes, one of which emphasizes productivity, the other emphasizes product quality. The mode that emphasizes productivity not only provides chemical vapor deposition of silicon on silicon particles but also produces silicon dust. Some of this dust remains loosely adhered to the product surfaces and is detrimental to product quality. The mode that emphasizes product quality comprises operation at a lower productivity thus lower dust production. The combined operation of this invention produces acceptable product at higher productivities than conventional procedures. Rather than removing the unwanted dust particles, this operation cements this dust to the product surface. Thus dust produced by the high productivity mode exemplified by Table I can be reduced in amount following the procedures of the gluing on mode described herein and illustrated by the examples.

To facilitate maintaining the desired temperature in the reaction zone, the gases used for silicon deposition and/or to maintain the particle bed in ebullient motion can be preheated prior to introduction into the reactor. For example, the hydrogen can be preheated. Preheating can be to some temperature level below that which causes silicon deposition within the distributor. To help avoid this difficulty, the distributor can be fitted with cooling means. Moreover, the gas should not be heated so high as to cause an untoward

EP 0 258 027 B1

## TABLE I

### PRODUCT SURFACE DUST FOR TYPICAL FLUID BED OPERATION

| Reactor | Reactor I.D., Inch(cm) | Average Bed Temp., °C | Silane Feed Productivity,[1] Lb/Hr Ft$^2$ (kg/hr m$^2$) | Molar % In H$_2$ | Average Particle Size (dps)[2] μm | Bed Mass, kg | Surface Dust, Wt % |
|---|---|---|---|---|---|---|---|
| 1 | 4.5 (11.4) | 650. | 11. (53.7) | 7.5 | | | .08 |
| 2 | 6.25(15.88) | 650. | 33.8 (165.O) | 12. | 777. | 52. | .22 |
| | 6.25 " | 650. | 36.1 (176.3) | 12. | 714. | 50. | .33 |
| | 6.25 " | 650. | 44.6 (217.8) | 14. | 748. | 31. | .34 |
| | 6.25 " | 650. | 33.3 (162.6) | 14. | 660. | 50. | .34 |
| | 6.25 " | 650. | 33.3 " | 14. | 690. | 50. | .36 |
| | 6.25 " | 650 | 46.9 (229.O) | 18.5 | 724. | 45. | .48 |
| 3 | 14.5 (36.83) | 660. | 19.-25. (92.8-122.1) | 5.7-7.5 | 845. | 370. | .092-.123 |
| | 14.5 " | 645. | 44. (214.8) | 15.4 | 545. | 370. | .31 |
| | 14.5 " | 627. | 44. " | 15.4 | 328. | 230. | .197 |
| | 14.5 " | 624. | 44. " | 12.1 | 851. | 220. | .358 |
| | 14.5 " | 624. | 44. " | 13.0 | 671. | 280. | .284 |
| | 14.5 " | 632. | 65. (317.4) | 19.1 | 627. | 230. | .221 |

[1] Productivity defined as the silane feed rate per reactor cross sectional area.

[2] Surface mean diameter, microns.

amount of deposition near the distributor and which welds or solders so many beads together that an untoward amount of pluggage occurs. It has been found that good results are obtained if the gas is preheated to a temperature of 300-400° C.

The process of this invention is conducted using a fluidized bed of silicon seed particles. These particles are of sufficient purity to be acceptable for the use intended. The seed particles can be prepared by this invention followed by reducing particle size to, for example, an average of 200 $\mu$m with, for example, an 80-400 $\mu$m range. Seed particles can be irregular in shape. They tend to become substantially spherical during operation of the reactor. Preferably the bed particles after silicon deposition have a $d_{ps}$ of 400-1000 $\mu$m, more preferably from 600 to 800 $\mu$m. However, beds having a $d_{ps}$ of 300-2000 $\mu$m can be used. The average particle size and the size range is not critical, so long as the bed can be fluidized under acceptable operating conditions.

The process of this invention can be operated in the high productivity mode for as long as desired. In other words, for the high productivity operation, time is essentially an independent variable and is only governed by convenience, reactor capacity, amount of silane available or some similar operation variable or variables. As an example, when using an 18 inch (45.7cm) reactor, at a productivity rate of 50 pounds (22.7 kg) of silicon per hour, a reaction temperature of 650° C., a deposition gas comprising 12-14% silane in hydrogen, a bed of particles weighing about 350 kg and having an average particle diameter of 450 microns ($\mu$m), it is convenient to cease high productivity operation when the bed weight has increased by about 40 kg to a total of about 390 kg.

After that increase in weight, operation is shifted to the quality mode to unite dust particles deposited on the surface of the particles in the fluidized bed and thereby prepare the product of the invention. Typically, the quality mode for an 18 inch (45.7 cm) diameter reactor comprises contacting the bed of silicon particles with deposition gas of 1-5 mole percent silane, preferably 2-4 mole percent silane in hydrogen, for the time required to deposit an additional layer of 0.1 to 5 microns in thickness. This causes a significant part of the dust on the particles to glue on to the particles and form the improved product. After the additional layer is deposited, product is discharged from the reactor.

To achieve preferred results, the use of the second deposition gas is conducted for a relatively short time but sufficient to cause a diminishment of the amount of readily removable dust on the surface of the silicon particles. Generally it is preferred to keep the duration of the quality-mode relatively short, so that operation can relatively quickly return to the high productivity mode and thereby allow the process to be conducted at a high overall productivity rate.

The general desirability of keeping usage of the second deposition gas to a short duration is influenced by two factors. First, it is generally preferred to select as thin an additional layer as will effectively do the job. As shown in one example given below, after about the first micron in thickness, additional deposition did not have an appreciable effect in reducing dust. Second, since the amount of silane to be utilized in the second deposition is a quantity that can be fairly closely estimated by calculation, and since the concentration of silane in the second deposition gas must be comparatively low so as to operate in a region where chemical vapor deposition is highly favored, the time duration when the second gas is employed is a dependent rather than an independent variable.

Generally, good results are obtained when the elapsed total time, which is the sum of the time durations of the first and second deposition periods, is within the range of 2.5 to 5 hours. Also, good results are obtained when the first deposition is from 2 to 5 times as long in duration as the second deposition. It is preferred to use a process sequence where the first deposition period is from 2 1/2 to 3 1/2 hours in duration and the second is from 1/2 to 1 1/4 hours in operation.

Preferably, the second deposition gas flow is begun before 10 minutes or so has elapsed from the termination of treatment with the first gas, i.e. the second gas is contacted with the silicon particles substantially immediately after the first gas has been contacted.

It is not necessary that the process be terminated after the second step is conducted. The sequence of the first and second deposition can be repeated after removal of product from the reactor and the addition of seed particles. For example, with product removal and replenishing of seed particles as indicated above, the process can be run one or two weeks or more by repetition of the deposition sequence 100 or more times.

Although good results are achieved by conducting the process on a semicontinuous basis using one reactor as described above, it is not necessary to do so. Alternatively the process can be conducted on a much more continuous basis. In this regard reference is made to figure 2.

In figure 2, reactor 1 is a fluidized bed reactor substantially as described above and as depicted in figure 1. The reactor is charged with a bed of silicon seed particles from line 12 near the top of the reactor, as shown. Under the selected reaction conditions within the teachings above, the bed is fluidized and the particles therein contacted with the first deposition gas. It is preferred as discussed above that this first gas be a mixture of $SiH_4$ and $H_2$ (designated by "FIRST SILANE/$H_2$ GAS" in the drawing). This gas is introduced into the reactor via line 13. In the reactor, deposition of silicon and decomposition of silane occurs as above described, resulting in growth of the silicon particles, deposition of silicon fines on the surface of said particles, and elutriation of additional fines with carrier gas and by product hydrogen through exit line 14 at the top of the reactor. After the particle growth, a portion of the bed of particles is taken off by line 15 near the bottom of the reactor. This is replaced in the first reactor with additional seed particles and the first deposition in that reactor continued.

Line 15 is connected to fluidized bed reactor 2 such that particles with surface silicon dust are transferred from reactor 1 to reactor 2. In reactor 2 the second deposition gas, i.e. designated "SECOND SILANE/$H_2$ GAS" in the drawing is introduced through line 16. After cementing dust on the particle surfaces, product particles are removed through line 17. Gas and any elutriated fines exit the reactor through line 18. Hydrogen produced in either or both reactors can be recycled to either or both reactors after admixture with silane, or sent on for other usage.

In this embodiment the second reactor can be smaller than the first because only a minor portion of the total silane is contacted with the particles in the second reactor. It can also be operated at a different temperature. The above discussion concerning operation of a single FB reactor applies to conducting the process in two reactors.

Example 1

A 400 kg bed of silicon particles was charged to the 14.5 inch (36.3 cm) diameter reactor and operated for 80-90 hours in a semicontinuous mode whereby seed particles were added every 1-2 hours and product was removed every 1-2 hours. By this procedure, bed level was maintained essentially constant during this period. The bed was subjected to deposition conditions for intermittent periods of 1 to 2 hours as follows:

| | |
|---|---|
| Average bed temperature: | 645° C. |
| Silane feed rate: | 25 lb/hr. (11.3 kg/hr) |
| Hydrogen feed rate: | 23-33 scfm (0.65-0.93 $m^3$/min) |
| Silane feed concentration: | 11.5-15% molar |
| $U/U_{min}$: | 2.2-3.2 |
| Silicon Deposition: | 19 lb/hr. (8.6 kg/hr) |

At the end of one period a sample was taken for screen and surface dust analyses. The surface mean particle diameter, $d_{ps}$, was determined to be 460 $\mu$m and particle surface dust was 0.198 wt. percent.

To analyze for surface dust, a 10 gram sample of silicon particles was placed in 10 ml of methanol in a screw capped bottle (approx.4 liq. oz. (12 cl) capacity) and placed in a water bath of an ultrasonic shaker device and subjected to ultrasonic vibrations (nominally 55,000 vibrations per second) for 30 minutes. The methanol with silicon dust particles suspended therein was passed through a sieve of 125 um mesh. The procedure was repeated until the methanol remained clear after sonification. The methanol/silicon dust portions were combined and evaporated to dryness. The weight of the dried dust removed was determined. As indicated above, after the first deposition the weight of the dust was 0.198 wt. percent of the sample.

After operating at the above conditions for 1 to 2 hours, to glue surface dust on to the larger particles the bed was subjected to second deposition conditions as follows:

| | |
|---|---|
| Average bed temperature: | 645° C. |
| Period: | 0.5 hours |
| Silane feed rate: | 4 lb/hr. (1.8 kg ) |
| Hydrogen feed rate: | 31 scfm (0.88 m/min) |
| Silane concentration: | 2.5% molar |
| Silicon deposition rate: | 2.8 lb/hr.(1.3 kg/hr) |

A sample of the particles was analyzed as above and the result was 0.12 wt. % surface dust. The silicon deposited was sufficient to add a layer of about 0.1 $\mu$m thick to the bed particles.

The procedure of this example can be repeated with the first deposition period using a silane feed stock containing 20%, 40%, 60%, 80%, or 90% silane admixed with hydrogen. Pure silane can also be employed. The temperature employed can be from 590°C. to 750°C. The gases used to glue on the surface dust can contain 1-5 mole percent silane in hydrogen. The deposition gases in both stages of operation, i.e. the first or high productivity stage, and the second mode, i.e. the gluing on process, can be preheated to 300-400°C. prior to introduction into the bed of particles. The particle bed can be maintained in a fluidized state by introducing the gases at a rate defined by $U/U_{min}$ of from 1.5 to 3.5. The deposition in the second mode can be conducted to deposit a layer of silicon of 0.1 to 5 $\mu$m in thickness. In those instances where the gases contain hydrogen admixed with silane, the hydrogen utilized can comprise hydrogen recovered from the reactor and recycled to the input gases.

In the process of the above example, the first deposition can be conducted by adding seed particles every 1.0 to 3.5 hours.

The second deposition or gluing on step can be conducted over a period of 1/2 to 1 1/4 hours in duration.

Following the procedure of the above example, the deposition gases comprising silane and hydrogen, or substantially pure silane, can be introduced at a pressure of slightly above atmospheric pressure, i.e. 1.01 atmospheres to 3 atmospheres.

In the process as typified by the above example the gluing on step is preferably conducted at 620-650°C. using a gas containing 1 to 5 mole percent silane, more preferably 2-4 mole percent silane in hydrogen.

The process of the above example can be repeated to produce silicon particles having a $d_{ps}$ of 400-1000 $\mu$m and with dust particles of from sub-micron size, e.g. 0.2-0.5 $\mu$m up to about 10 $\mu$m. The process of the above example can be repeated using seed particles of 200 $\mu$m $d_{ps}$ with a $d_{ps}$ range of 80-400 $\mu$m.

Example 2

Following the operation of Example 1, product was drawn from the reactor so that 370 kg. of particles remained in the bed. The deposition of silicon was resumed and conducted for 24 hours using the following conditions:

| Average bed temperature: | 645°C. |
|---|---|
| Silane feed rate: | 50 lb/hr. (22.7 kg/hr) |
| Hydrogen feed rate: | 55 scfm (1.6 m³/min) |

At the end of 24 hours, a sample of the bed was removed to determine particle size distribution and surface dust:

| $d_{ps}$: | 545 $\mu$m |
|---|---|
| Surface dust: | 0.31 wt. % |

The operation was resumed using a silane feed rate of 11.6 lb/hr.(5.3 kg/hr), and a silane concentration of 4 mole percent in hydrogen with a silicon deposition rate of 8.1 lb/hr (3.8 kg/hr).The effect of surface dust was determined over time intervals of l, 2, and 3 hours of treatment with the second deposition gas. The results were as follows:

| Hours of Treatment with Second Deposition Gas | Surface Dust Wt. % | Cementation Layer Added, $\mu$m |
|---|---|---|
| 0 | 0.31 | – |
| 1 | 0.072 | 0.91 |
| 2 | 0.063 | 1.81 |
| 3 | 0.073 | 2.72 |

The dimensions of the cementation layers were calculated from the 8.1 lb.(3.8 kg) per hour silicon deposition rate, the 370 kg. bed and the 545 $\mu$m dps. The discrepancy in surface dust weight percent for the two hour run is believed to be due to experimental error.

Example 3

Table II below summarizes results and conditions of several typical long duration fluid bed operations during which the semicontinuous method of this invention was demonstrated.

Typically, a bed of silicon particles of desired particle size distribution taken from previous operation is charged to the 14.5inch (36.8 cm) diameter reactor. After desired bed temperature is reached, first deposition gas is fed for three hours. For each of the runs given in Table II, first deposition gas consisted of 50 lb/hr (22.7 kg/hr). silane mixed with 70 scfm (2 m$^3$/min) of hydrogen (12.3% silane). During this period, bed increases from 270 to 315 kg. of silicon.

At the end of the first deposition period, adjustments to silane and hydrogen feed rates are made to give the desired second deposition gas composition. Silane feed rate is reduced to 14.1 lb/hr. and hydrogen rate increased to 78.3 scfm (2.2 m$^3$/min-3.4% silane).The second deposition gas feed is continued for 1 hour which deposits 4.5 to 5 kg. of silicon essentially uniformly over the entire bed particle surface. This operation is intended to deposit from 1.5 to 2.0 $\mu$m of surface layer depending on the exact particle size distribution.

During the last 10 minutes of the second deposition period, product is withdrawn from the reactor to bring the bed back to the level at the start of the cycle. The amount withdrawn each cycle is estimated by the operator to be the sum of the weight of seed particles added plus the calculated amounts of first and second silicon depositions. Once product is withdrawn, silane and hydrogen flows are reset to the first deposition conditions.

Seed particles are added to the reactor at the start of each cycle to maximize growth on seed particles. Over the duration of the run, product particle size is controlled by the operator by the number of seed particles added each cycle. No attempt is made to change temperature from first to second deposition period because of the slow response time of this high heat capacity system. However, as feed gases are changed, bed temperature does increase slowly about 5°C. during the second deposition period and return slowly during the first. Table II gives the average temperature over the entire cycle.

Table II shows that surface dust was reduced to the range 0.03-.08 wt. percent practicing this invention. For the same productivity and temperature range, dust would otherwise be between 0.3 and 0.35 wt. percent (Table I). Second deposition layer thickness ranged from 1.6 to 1.9 $\mu$m during the six runs for bed weights in the 247 to 271 kg. range and surface mean particle sizes of 662 to 744 $\mu$m. These runs comprise a total operating time of 876 hours and 61 samples taken for surface dust analyses.

The process of the above Example 3 can be modified and repeated so that the cycle used is a first deposition period of 2.5-3.5 hours and the second deposition period ("gluing on") is 0.67-1.25 hours.

It will be apparent to a skilled practitioner that the procedure of the above examples can be modified to a more continuous basis using two FB reactors. For example, the first step or high productivity mode is conducted in the first reactor, say by using a 400 kg. bed of silicon particles, a bed temperature of 645°C., a silane feed rate of 25 lbs./hr (11.3 kg/hr), a seed addition rate of 1 lb./hr (0.45 kg/hr), a hydrogen feed rate of 27.5 cfm (0.78 m$^3$/min), a silane feed concentration of 15% molar, and a U/U$_{min}$ of 2.2-3.2 and a silicon deposition rate of 19 lb./hr. (8.6 kg/hr).

Each hour, a 20 lb. (19 + 1) (9.1 kg) charge of particles can be transferred from the first to the second reactor and surface dust glued on using a deposition temperature of 645°C. The bed size is selected so that the residence time is sufficient to yield the desired thickness of cementation layer. The feed rate of hydrogen selected is sufficient to fluidize the bed, the silane concentration is 1-5% to produce low dust operation.

The process of this invention produces a highly desirable polysilicon product useful for the production of silicon semi-conductor devices. The product is in the form of approximately spherical particles. These are free flowing, and therefore can be handled much more readily by mechanized systems than the rods formed by the Siemen's process. Mechanical systems can be designed for storage, and handling of the free flowing material produced by this invention which decrease the chances for contamination. In general the size distribution of products produced by this invention have the following size distribution ($\mu$m):

| | |
|---|---|
| - Typical range | 150-1500 |
| - Typical average | 650-750 |

The particle density(g/cc) is about 2.3 and in general is:

| | |
|---|---|
| - Typical range | 2.25-2.33 |
| - Typical average | 2.30-2.31 |

Preferred materials have a bulk density of about 1360 kg/m$^3$. Surface dust is preferably less than about 0.08 wt% and is typically 0.010-0.070 weight percent. Using silane of good purity the concentration of key transition metal impurities approaches or matches high quality available Siemen's product. Typical purities from operation are:

| | | Average | Range |
|---|---|---|---|
| Boron | ppba | 0.12 | 0.01-0.25 |
| Phosphorus | ppba | 0.11 | 0.01-0.19 |
| Carbon | ppm | 0.25 | 0.16-0.33 |

It will be appreciated from the foregoing that we have provided a polysilicon process in which the fines which are inherently produced in a fluid bed deposition type operation using silicon seed particles and a silane feed are in effect glued on to the product particles so as to reduce the undesirable effect of the silicon fines. The process comprises operating a fluid bed in two modes. In the first mode, high productivity is favoured at the expense of producing fines which are produced by homogeneous decomposition of the

## TABLE II

| Run No. | Hours of Operation | No. of Cycles[2] | Bed Weight, kg | Avg. Bed Temp., °C | Product Size (dps)[1], $\mu$m | No. Samples | Surface Dust, Wt % Range | Mean | Std. Dev. | Layer Thickness $\mu$m |
|---|---|---|---|---|---|---|---|---|---|---|
| 1 | 172 | 43 | 270 | 650 | 662 | 13 | .031-.127 | .079 | .027 | 1.6 |
| 2 | 168 | 42 | 271 | 668 | 708 | 10 | .012-.072 | .052 | .017 | 1.7 |
| 3 | 68 | 17 | 247 | 656 | 698 | 3 | .046-.06 | .052 | .007 | 1.9 |
| 4 | 151 | 38 | 260 | 628 | 727 | 10 | .022-.066 | .042 | .0151 | 1.8 |
| 5 | 147 | 37 | 262 | 632 | 671 | 11 | .015-.044 | .030 | .0083 | 1.7 |
| 6 | 170 | 43 | 265 | 640 | 744 | 14 | .016-.061 | .039 | .0151 | 1.9 |
| | 876 | | | | | 61 | | .049 | | |

1  dps is the surface mean diameter.
2  The cycle was fixed at:  1. 3 hrs at 50 lb/hr (22.7 kg/hr) silane feed, 69.5 SCFM (1.97 $m^3$/min) $H_2$, then
2. 1 hr "gluing on" at 14.1 lb/nr 6.4 kg/hr) silane, 78.3 SCFM (2.22 $m^3$/min) $H_2$ - product removed last 10 minutes.

silane feed. In the second mode, the fines are in effect glued on to the particles to which they are adhered by means of deposition of a thin layer of silicon. In the second mode, the concentration of the silane in the feed gases is reduced thus favouring heterogeneous deposition of the silicon on the silicon particles in the bed. The process can be operated using a single fluid bed reactor by alternating cycles or in a more continuous manner utilizing two fluid bed reactors, the first reactor being operated at the high productivity rate with the second reactor taking the silicon particles from the first reactor and operated at the gluing on conditions.

**Claims**

1.  A process for preparing polysilicon comprising:
    [I] contacting silicon particles in a fluidized bed with a mixture of hydrogen and silane containing 10 to 100 mole percent of silane at a temperature of 590° to 750°C so that both heterogeneous deposition and homogeneous decomposition take place resulting in (a) chemical vapor deposition of silicon on said particles and also (b) the formation of silicon dust; and
    [II] subsequently contacting silicon particles resulting from step [I] in a fluidized bed with a mixture of hydrogen and silane containing 1 to 5 mole percent of silane at a temperature of 620° to 650°C to deposit by heterogeneous deposition a layer of silicon 0.1 to 5 $\mu$m thick on the surfaces of said particles and cement silicon dust on said surfaces to said particles.

2.  A process according to claim 1 in which step (I) is conducted in one fluid bed reactor and step (II) in a second fluid bed reactor.

3.  A process according to claim 1 or 2 in which the duration of step (I) is 2 to 5 times that of step [II].

4.  A polysilicon product characterized by being free flowing and in the form of approximately spherical particles having a size distribution of from 150 to 1500 $\mu$m, an average size of 650 to 750 $\mu$m, a particle density of 2.25 to 2.33 g/cm$^3$ and a bulk density of about 1360 kg/m$^3$, said product being further characterized by having a silicon surface dust content of less than 0.08 wt.%.

5.  A semiconductor device prepared from a polysilicon product as claimed in claim 4.

6.  A process as claimed in claim 1, 2 or 3 comprising the additional step of preparing a semiconductor device from the polysilicon.

**Patentansprüche**

1.  Verfahren zur Herstellung von Polysilicium, welches folgende Schritte umfaßt:
    [I] In-Kontakt-Bringen von Silicium-Teilchen in einem Fließbett mit einer Mischung aus Wasserstoff und Silan, die 10 bis 100 Mol-% Silan enthält, bei einer Temperatur von 590°C bis 750°C, so daß sowohl eine heterogene Abscheidung als auch ein homogener Zerfall stattfinden, was
       (a) zu einer chemischen Abscheidung von Silicium aus der Dampfphase auf den Teilchen und auch
       (b) zur Bildung von Siliciumstaub führt; und
    [II] nachfolgendes In-Kontakt-Bringen der aus Schritt [I] resultierenden Siliciumteilchen in einem Fließbett mit einer Mischung aus Wasserstoff und Silan, die 1 bis 5 Mol-% Silan enthält, bei einer Temperatur von 620°C bis 650°C, um durch heterogene Abscheidung eine Schicht aus Silicium mit einer Dicke von 0,1 bis 5 $\mu$m auf den Oberflächen der Teilchen und festaufgebrachten Siliciumstaub auf den Oberflächen der Teilchen abzuscheiden.

2.  Verfahren nach Anspruch 1, in dem Schritt [I] in einem Fließbettreaktor und Schritt [II] in einem zweiten Fließbettreaktor durchgeführt werden.

3.  Verfahren nach Anspruch 1 oder Anspruch 2, in dem die Dauer von Schritt [I] das 2- bis 5-fache der Dauer von Schritt [II] beträgt.

4.  Polysilicium-Produkt, dadurch gekennzeichnet, daß es freifließend ist und in Form nahezu kugelförmiger Teilchen vorliegt, die eine Größenverteilung im Bereich von 150 bis 1500 $\mu$m, eine mittlere Größe

von 650 bis 750 $\mu$m, eine Teilchendichte von 2,25 bis 2,33 g/cm$^3$ und eine Schüttdichte von etwa 1360 kg/m$^3$ aufweisen, wobei das Produkt weiter dadurch gekennzeichnet ist, daß es einen Gehalt an Siliciumstaub auf der Oberfläche von weniger als 0,08 Gew.-% hat.

5.  Halbleitervorrichtung, hergestellt aus einem Polysiliciumprodukt nach Anspruch 4.

6.  Verfahren nach Anspruch 1, 2 oder 3, welches den zusätzlichen Schritt der Herstellung einer Halbleiter-Einrichtung aus dem Polysilicium umfaßt.

**Revendications**

1.  Procédé de préparation de silicium polycristallin, consistant :
    (I) à mettre en contact des particules de silicium dans un lit fluidisé avec un mélange d'hydrogène et de silane contenant 10 à 100 moles % de silane à une température de 590° à 750°C, de telle sorte que s'effectuent à la fois un dépôt hétérogène et une décomposition homogène ayant pour résultat
    (a) un dépôt de silicium en phase gazeuse par procédé chimique sur lesdites particules, ainsi que
    (b) la formation de poudre de silicium ; et
    (II) à mettre ensuite en contact les particules de silicium résultant de l'étape (I) dans un lit fluidisé avec un mélange d'hydrogène et de silane contenant 1 à 5 moles % de silane à une température de 620° à 650°C pour déposer par déposition hétérogène une couche de silicium de 0,1 à 5 $\mu$m d'épaisseur sur les surfaces desdites particules et à cimenter la poudre de silicium sur lesdites surfaces desdites particules.

2.  Procédé suivant la revendication 1, dans lequel l'étape (I) est mise en oeuvre dans un réacteur à lit fluide et l'étape (II) est mise en oeuvre dans un second réacteur à lit fluide.

3.  Procédé suivant la revendication 1 ou 2, dans lequel la durée de l'étape (I) est égale à une valeur de 2 à 5 fois celle de l'étape (II).

4.  Produit consistant en silicium polycristallin, caractérisé en ce qu'il présente un écoulement libre et est sous forme de particules approximativement sphériques ayant une distribution des diamètres de 150 à 1500 $\mu$m, un diamètre moyen de 650 à 750 $\mu$m, une masse volumique de particules de 2,25 à 2,33 g/cm$^3$ et une masse volumique apparente d'environ 1360 kg/m$^3$, ledit produit étant en outre caractérisé par une teneur en poussière de silicium en surface qui est inférieure à 0,08 % en poids.

5.  Dispositif semiconducteur préparé à partir d'un produit consistant en silicium polycristallin suivant la revendication 4.

6.  Procédé suivant la revendication 1, 2 ou 3, comprenant l'étape supplémentaire consistant à préparer un dispositif semiconducteur à partir du silicium polycristallin.

SEED
PARTICLES
IN

PRODUCT
PARTICLES
OUT

$H_2$

FIG. 1.

SEED
PARTICLES
IN

REACTOR 1

FIRST
SILANE/$H_2$
GAS IN

LARGER
PARTICLES

REACTOR 2

SECOND
SILANE
GAS IN

PRODUCT
PARTICLES
OUT

FIG. 2.